## Europäisches Patentamt

(19) **European Patent Office**

**Office européen des brevets**

(11) Publication number: **0 133 733**
**B1**

(12) # EUROPEAN PATENT SPECIFICATION

(45) Date of publication of patent specification: **23.05.90**

(51) Int. Cl.⁵: **C 04 B 12/02, C 04 B 28/34**

(21) Application number: **84201155.3**

(22) Date of filing: **09.08.84**

(54) **Production of solid phosphorus pentoxide containing materials for fast-setting cements.**

(30) Priority: **11.08.83 US 522077**
**07.06.84 US 617317**

(43) Date of publication of application:
**06.03.85 Bulletin 85/10**

(45) Publication of the grant of the patent:
**23.05.90 Bulletin 90/21**

(84) Designated Contracting States:
**BE CH DE FR GB IT LI NL SE**

(56) References cited:
**FR-A- 941 088**
**US-A-3 403 038**
**US-A-3 615 774**
**US-A-4 059 455**

(73) Proprietor: **STAUFFER CHEMICAL COMPANY**
**Westport Connecticut 06880 (US)**

(72) Inventor: **Sherif, Fawzy Gamaleldin**
**2 Babcock Court**
**Stony Point New York 10680 (US)**
Inventor: **Via, Francis Anthony**
**2389 Ridge Street**
**Yorktown Heights New York 10598 (US)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

BACKGROUND OF THE INVENTION

1. Field of the Invention

This invention relates to fast-setting cementitious compositions. More particularly, it relates to a process for producing solid phosphorus pentoxide ($P_2O_5$) containing materials suitable for use in fast-setting cements.

2. Related Art

Fast-setting cementitious compositions having utility for various purposes for which concretes are employed have been heretofore known.

U.S. Patent 3,202,520 (Enoch, August 8, 1965) discloses a rapid set non-hygroscopic cement composition consisting essentially of a blend of a phosphate derived from phosphoric acid and of alumina, and containing from 15 to 55 weight percent of $P_2O_5$ and from 45 to 75 weight percent of alumina, and from 5 to 18 weight percent of magnesium oxide. The phosphoric acid is used in its liquid state then moisture is removed by drying the blend above 100°C (212°F).

U.S. Patent 3,525,632 (Enoch, August 25, 1970) discloses a rapid setting concrete cement composition which comprises dry blending magnesium containing compounds, aluminum containing compounds and phosphorus containing compounds from stated sources in stated weight percentages, and then pulverizing the blended material without a separate drying stage. The phosphorus containing compound is a mixture derived from phosphoric acid, and at least 50 weight percent of one of trimagnesium phosphate, aluminum orthophosphate, and phosphoric anhydride.

U.S. Patent 3,879,209 (Limes et al., April 22, 1975) discloses a process for making a fast-setting concrete comprising establishing a mixture of an aggregate, containing at least 10 percent by weight of magnesia, and ammonium phosphates in aqueous solution. This patent further discloses that a commercial (agriculture fertilizer) product known as sequestered phosphatic solution (SPS) is particularly suitable as the source of the ammonium phosphate. The ammonium component is an essential feature of this invention.

U.S. Patent 4,059,455 (Limes et al., November 22, 1977) discloses a process for making a fast-setting concrete comprising establishing a mixture of an aggregate, containing at least 1% magnesia, and ammonium phosphates in aqueous solution. Again, the ammonium component is essential for attainment of the desired results of the invention.

U.S. Patent 4,174,227 (Tomic, November 13, 1979) discloses a grouting system comprising an acidic reactive component comprising at least one acidic oxy phosphorus compound selected from phosphoric acids, anhydrides of phosphoric acids and salts of phosphoric acids with multivalent metal cations, and a basic reactive component comprising at least one basic metal compound of a Group II or Group III metal capable of reacting with the oxy phosphorus compound(s) in the presence of water to form a monolithic solid. This patent teaches that the monovalent salts of phosphoric acid, e.g. the ammonium phosphates, do not develop early pull strength.

U.S. Patent 3,821,006 (Schwartz, June 28, 1974) discloses a patching composition consisting essentially of a reactive component of MgO with an acid phosphate salt and an inert aggregate component. The particle size of the inert aggregate component is related to the compressive strength of the cement formed at an early cure age.

The mixtures employed in the methods of the patents discussed above set, and develop usable strength much more rapidly than conventional materials. Nonetheless, each of these patents is limited (as discussed above) and therefore distinguishable from the mixtures and processes of the present invention in several ways.

U.S. Patent 3,673,111 (Hovarth, June 27, 1972) discloses a process for manufacturing a solid phosphoric acid catalyst in which a siliceous adsorbent is admixed with a polyphosphoric acid. The mixture is heated at an elevated temperature and thereafter extruded. The extrudate is further treated by drying first in a steam atmosphere and then in a dry air atmosphere. This patent does not teach a process for producing solid $P_2O_5$ containing material suitable for use in fast-setting cements but rather teaches a process for making a catalyst.

U.S. Patent 3,475,188 (Woodhouse et al., October 28, 1969) discloses a dry refractory composition consisting essentially of phosphates absorbed on diatomaceous earth up to 80% by weight being absorbed thereon, magnesium oxide and refractory aggregate. Compositions and processes in which well above 80% by weight of phosphates absorbed on diatomaceous earth are present would be advantageous.

A fast-setting cementitious composition in which the phosphorus pentoxide reactive component is a solid and further can be derived from industrial wastes and can be premixed and preblended with a solid component such as magnesium oxide would be advantageous in that an ecnomic, solid blend could be easily packaged, inventoried, handled and transported to the intended application site, then combined at the site with a readily available aqueous component such as water to form a solid. For example, a solid $P_2O_5$ containing material could be premixed with a solid component, e.g. magnesium oxide, and optionally a solid aggregate to form a one component cement mixture, instead of the current two component $P_2O_5$ containing solution and MgO containing solid that are separately packaged. It would be even more advantageous to utilize a solid waste that heretofore has created significant disposal problems.

It is an object of the present invention to provide a process for producing solid phosphorus pentoxide containing materials suitable for use in fast-setting cements.

Other objects and advantages of the present invention are shown through the specification.

## SUMMARY OF THE INVENTION

In accordance with the present invention, a process has now been discovered for producing solid phosphorus pentoxide containing material suitable for use in fast-setting cements. This process comprising mixing a porous material with a liquid, phosphorus pentoxide containing material then heating the mixture until a dry solid is produced.

The solid phosphorus pentoxide containing material thus formed can then be dry blended with a solid component comprising a magnesium containing compound. This solid component must be capable of being dry blended with the solid phosporus pentoxide containing material without reacting therewith in the dry state and must further be capable of reacting with the phosphorus pentoxide containing material in the presence of an aqueous component to form a monolithic solid. The dry blend can further be comprised of an aggregate.

## DETAILED DESCRIPTON OF THE INVENTION

The present invention comprises a process for producing solid phosphorus pentoxide containing materials suitable for use in fast-setting cements. This process comprises mixing a porous material with a liquid, posphorus pentoxide containing material then heating the mixture until a dry solid is produced.

The liquid, phosphorus pentoxide containing material can be any material containing free or available $P_2O_5$ such as green acid. This material can be selected from various industrial and agricultural chemicals and wastes. Some examples of suitable $P_2O_5$ containing materials include aluminum phosphate solution; ammonium phosphate solution; calcium phosphate solution; bright dip phosphoric acid from metal polishing processes; phosphoric acid; waste phosphoric acid from agricultural chemical processes; steel phosphatizing sludge acid resulting from the pickling of steel to inhibit corrosion; arsenic sulfide sludge acid resulting from the treatment of $P_2O_5$ waste streams with $H_2S$ to remove arsenic; and any combination of the above liquids.

The liquid $P_2O_5$ containing material can further include various acidic phosphorus compounds, e.g., orthophosphoric acid, pyrophosphoric acids and other polyphosphoric acids and their salts.

A preferred liquid $P_2O_5$ containing material is ammonium phosphate fertilizer solution. This fertilizer solution contains a mixture of ortho- and polyphosphates and in its original aqueous state undergoes continuous hydrolysis upon standing wherein the weight ratios of the different phosphate forms keep changing, usually from high polyphosphate and low orthophosphate contents to low polyphosphate and high orthophosphate contents as the fertilizer ages. The polyphosphates of this fertilizer solution can include pyro, tri, tetra, etc., phosphate species. Because of this continuous hydrolysis, magnesium phosphate cements using liquid ammonium phosphate fertilizer as the $P_2O_5$ containing component exhibit unpredictable qualities. Usually, when a fresh fertilizer solution is used, the cement mixture does not set at all or only forms a weak cement, and when an older fertilizer solution is used, the cement sets very rapidly with little or no working time to apply the cement. Liquid fertilizer solution upon standing precipitates hard to handle insolubles and in cold weather the liquid freezes and gels creating more handling problems.

When the fertilizer solution is absorbed into the porous material of this invention, the fertilizer is held in a bound form and this composition is much more thermally stable in a temperature range of from ambient to about 120°C than the original fertilizer solution. The resulting dry solid maintains a constant phosphate distribution between the ortho- and polyphosphate species and does not hydrolyze as the original fertilizer solution would.

Liquid ammonium phosphate fertilizer solutions with a low polyphosphate content, from about 0 to 20 weight percent, form a cement with inadequate working time and those fertilizer solutions with a high polyphosphate content, about 70 weight percent and above, form a very slow setting and weak cement. Fertilizer solutions with a polyphosphate content of about 20 to about 70 weight percent form the best cements when absorbed into diatomaceous earth and heated slowly to dryness. However, high polyphosphate content fertilizer solutions can form acceptable cements when these solutions are absorbed in diatomaceous earth and heated to dryness.

A dry blend capable of forming a fast-setting cement can be formulated using the solid $P_2O_5$ containing material with the quantity and quality of the other cement components being chosen to optimally fit the particular distribution of phosphate species "frozen" in the dry solid stable form. When hydrated, in its dry form, it is storable, flowable and non-hygroscopic.

The porous material which can be employed in this invention includes diatomaceous earth, kieselguhr, artificially prepared porous silica, vermiculite, alumina, and such naturally occurring substances as various fuller's earth and clays such as bentonite, montmorillonite, acid treated clays and the like. Each porous material which may be used will exert its own specific influence upon the solid $P_2O_5$ containing material formed and the resulting fast-setting cement which will not necessarily be identical with that of other members of the class. The porous material can be inert or partially inert. Members of the class of porous material can be used separately or in combination with each other.

A preferred porous material is diatomaceous earth. The highly porous diatomaceous earth can absorb much more than 80% by weight, based on the weight of diatomaceous earth, of a liquid containing phosphate, e.g., liquid ammonium phosphate fertilizer solution and absorption of 225% and above are preferred. Upon drying the diatomaceous earth with the liquid containing phosphate absorbed therein, a solid $P_2O_5$ containing material forms.

The diatomaceous earth can comprise from about 30% to about 90% by weight of the solid $P_2O_5$ containing material with about 30% to about 65% being preferred; can have a density of from 0.112 to 0.312 gms/cc (7.0 to 19.5 lbs/cubic foot); can have water absorption of from 170% to 255% by weight; and can have a surface area of from 1 to 100 m²/g. It is believed that when diatomaceous earth is mixed with liquid ammonium phosphate fertilizer and heated to form the dry solid, more than a physical entrapment of the $P_2O_5$ containing material occurs.

The liquid $P_2O_5$ containing material is mixed with the porous material at ambient temperature to form a slurry or paste. The amount of liquid $P_2O_5$ material added is important. Amounts up to that which will fill the pores of the porous material can be used with one drying step, however amounts exceeding the pore volume of the porous material can be absorbed with several drying steps. The slurry or paste is heated to a temperature of from about 60°C to about 200°C to drive off moisture and other volatile impurities until a dry solid is produced.

The rate of heating is adjusted so that, upon drying, the pores of the porous material are not blocked with the $P_2O_5$ containing material, but remain available to the aqueous component when the cement is made. Sufficient porous material should be used to have enough pore volume available to absorb a suitable amount of the $P_2O_5$ containing material. Upon drying, most of the aqueous component will be driven off, leaving solid $P_2O_5$ material deposited inside and over the walls of the microscopic pores.

The starting materials, i.e. the liquid $P_2O_5$ containing material, and the porous material are mixed in the proportions necessary to form a dry solid comprising from about 10% to about 70% by weight of the $P_2O_5$ containing material and from about 30 to about 90% by weight of the porous material in the resulting solid $P_2O_5$ containing material.

The solid $P_2O_5$ containing material prepared by the processes of this invention is dry blended with a solid component comprising a magnesium containing compound to yield a dry blend capable of forming a fast-setting cement when reacted with an aqueous component in accordance with this invention. The solid $P_2O_5$ material can optionally be milled and classified prior to being dry blended. This material usually has a particle size range of from 44 to 150 μm (100 to 325 mesh) and a surface area of from 1 to 10 m²/g.

Generally, the fast-setting cement of this invention can be used for producing fast-setting concrete structures, e.g., structures suitable for roadway construction and roadway patches or other load-bearing uses, however in its broader aspects, the invention is generally applicable to preparing concrete structures with various characteristics, e.g., high or low strength, for a variety of other purposes as well. The characteristics of any particular concrete structures formed can depend upon the weight ratio of the various components, the nature of the aggregate employed, the temperature conditions of application and the curing conditions as well as other factors.

Fast-setting cement can be applied indoors or outdoors to concrete drives, storage yards, warehouse and factory floors to repair and restore damaged surfaces. Fast-setting cement can be used to fill structural cracks in slabs, and repair highway median barrier walls. This type of cement can be used in almost any situation requiring a quick, permanent repair of concrete. In addition the fast-setting cement can be used for binding and coating metals and woods for structural and flame resistant applications.

Generally, the setting time for fast-setting cement varies widely and can range from a few seconds up to a few hours. As a practical matter, the setting time must be sufficient to allow the dry blend to be thoroughly mixed with the aqueous component to form a slurry or a non-collapsible putty and be applied to the intended area, whether a mold or a patch, prior to hardening into a monolithic solid. In quantitative terms, fast-setting means that the cement hardens in less than 30 minutes, usually in about 1 to 10 minutes, and reaches more than 3.4 MPa (500 psi) of compression strength in usually less than two hours.

The dry blend of the present invention comprises a solid $P_2O_5$ containing material prepared according to the processes of this invention and a solic component selected from at least one of the group consisting of magnesium containing compounds. The preferred magnesium containing compounds are magnesium oxide, magnesium hydroxide and magnesium carbonate. These compounds must be capable of being dry blended with the solid $P_2O_5$ containing material without reacting therewith. However, in the presence of an aqueous component the dry blend will react to form a monolithic solid. Mixtures of these magnesium compounds can also be employed.

A preferred solid component contains MgO. This MgO can be of low reactivity, of high reactivity or a mixture of low and high reactivity wherein the ratio of the constituents of the mixture is selected to achieve the working time and cement strength desired. This preferred solid component can usually be from 25% to 50% by weight of the overall dry blend. Aggregate usage can range from 0% to 400% by weight of the dry mix with a range of from about 40% to about 150% by weight of the dry mix being preferred.

A particulate aggregate, preferably graded sand, can be included in the dry blend in a controlled amount as a filler. Aggregate can greatly enhance the strength of the hardened concrete cement. Other aggregate materials which can be used include particles of competent rocks or rock-forming minerals such as granite, basalt, dolomite, andesite, feldspars, amphiboles, pyroxenes, olivine, gabbro, rhyolite, syenite, diorite, dolerite, peridotite, trachyte, obsidian, quartz, etc., as well as materials such as slag, cinders, fly ash, glass cullet, wood chips, and fibrous materials such as chopped metal wire (preferably steel), glass fibers, asbestos, cotton, and polyester and aramide fibers. Aggregates having different particle shapes and sizes can be used. Mixtures of different aggregates can also be used. The porous material used to absorb the liquid $P_2O_5$ containing material will further function as an aggregate.

The dry blend remains a free flowing powder until it is contacted with an aqueous component, preferably water, then a reaction occurs forming a fast-setting cement. The amount of aqueous component used is important. Too much water can convert the dry blend into a thin slurry that will not set until substantial dehydration occurs; and, too little water will not wet the dry blend sufficiently to allow the necessary chemical reaction. The optimum amount of water will depend upon the particular physical characteristics of the constituents of the dry blend, e.g. absorbency, surface area, etc. However, the optimum amount of water must be sufficient to adequately wet the dry blend and optional aggregate mixture to form a thick slurry or non-collapsible putty. This optimum amount of water can be determined on a blend by blend basis.

The various blends of this invention and the process of combining them with an aqueous component result in the production of unique fast-setting cements.

In a particular embodiment of the dry blend according to this invention, the components of the solid $P_2O_5$ containing material are an ammonium phosphate solution and diatomaceous earth; the solid component is magnesium oxide; and the aggregate is silica. The resulting cement had adequate working time and an acceptable strength.

The following Examples illustrate certain embodiments of the invention but should not be construed in a limiting sense. The scope of protection sought is set forth in the claims which follows the Examples.

## Example 1

Spent bright dip acid from metal polishing processes containing 27% phosphorus pentoxide ($P_2O_5$) and 3% aluminum oxide ($Al_2O_3$) was added to CELITE diatomateous earth in a weight ratio of 2:1. A paste was formed. The resulting paste was dried at 110°C for 16 hours to drive off water and other volatile inorganic or organic impurities. A dry solid was formed. This dry solid contained 31% $P_2O_5$ and 4% $Al_2O_3$.

The resulting dry solid was milled and then blended with a magnesium oxide (MgO)/gravel mixture in a ratio of 60 parts by weight solid acid to 210 parts by weight MgO/gravel mixture. The MgO/gravel mixture contained 20 parts by weight MgO and 80 parts by weight gravel. Seventy parts by weight of water were then added to the resulting blend to form a slurry. This slurry was poured into a 5 cm (2'') cube mold. The slurry hardened within 5 minutes. Compression strength of the resulting cement was 6.2 MPa (900 psi) after 2 hours and 22.4 MPa (3250 psi) after 28 days.

## Example 2

900 gms of spent bright dip acid from metal polishing processes containing 27% $P_2O_5$ and 3% $Al_2O_3$ was mixed with 300 gms of monoaluminum phosphate solution containing 33.5% $P_2O_5$ and 8% $Al_2O_3$. This mixture was absorbed into 500 gms of CELITE diatomaceous earth. The resulting paste was dried at 130°C for 16 hours. The dry solid was found to contain 25.6% $P_2O_5$. This dry solid was blended with a MgO/gravel mixture in a 1:3:2 weight ratio then stored in plastic bags for 4 weeks. The MgO/gravel mixture had the same weight composition as that of Example 1.

After the 4 weeks storage period the cement dry blend was still dry and free-flowing. Upon adding 60 parts by weight of water, a slurry was formed. This slurry hardened after 3 minutes. The compression strength was 6.2 MPa (900 psi) after 2 hours and 25.9 MPa (3750 psi) after 28 days.

## Example 3

500 gms of CELITE diatomaceous earth was mixed with 1320 gms of liquid ammonium phosphate fertilizer. The fertilizer contained 34% $P_2O_5$. The semi-solid resulting from the mixture was dried at 105°C and milled to 1.4 mm (14 mesh) particles. The $P_2O_5$ content of the dry solid was found to be 36%.

60 gms of the dry solid was blended with 190 gms of a mixture containing 75% silica aggregates and 25% MgO. 40 gms of water was added to the blend and stirred thoroughly to form a slurry. This slurry was poured into a 5 cm (2'') cube mold. The slurry hardened after 8 minutes. Compression strength of the resulting cement was 13.8 MPa (2000 psi) after 2 hours and 36.2 MPa (5250 psi) after 28 days.

In a comparative example, using a solution of ammonium phosphate instead of the dry solid, the slurry hardened after 8 minutes and had a compression strength of 13.8 MPa (2000 psi) after 2 hours.

## Examples 4—9

4000 gms of diatomaceous earth STANDARD SUPER-CEL was mixed with 9000 gms of liquid ammonium phosphate fertilizer containing 34% $P_2O_5$. The mixture was dried at 105°C for 16 hours. The dry material was milled to give by weight 11.8% greater than 0.15 (100 mesh) size, 23.6% between 0.15 and 0.074 mm (100 and 200 mesh) and 64.6% less than 0.074 mm (200 mesh). The dry material contained 36% $P_2O_5$. The pH of the dry material was 5.6. Various mixtures of this material each with a dead burnt MgO, a more reactive MgO and aggregates were prepared. Water was added to each mixture and the slurries resulting were poured into 75 cm (2'') cubes or 5 × 10 cm (2'' × 4'') cylinders. Initial set times and the compression strengths after 2 hours were measured.

The composition of these mixtures and the measurements taken are summarized in the following table.

TABLE I

| Example No. | Solid $P_2O_5$ Wt. % | MgO Wt. % | | Aggregate Wt. % | $H_2O$ Wt./100 wt. | Set Time, Initial, Min. | Compression Str., (psi)/2 hr. |
|---|---|---|---|---|---|---|---|
| | | Dead Burnt | More Reactive. | | | | |
| 4 | 26.9 | 0 | 14.6 | 58.5 | 14.2 | 6 | 27.6 (4300) |
| 5 | 26.9 | 3.6 | 11.0 | 58.5 | 14.2 | 7 | 21.7 (3150) |
| 6 | 26.9 | 7.3 | 7.3 | 58.5 | 14.2 | 10 | 20.3 (2950) |
| 7 | 26.9 | 11.6 | 3.6 | 58.5 | 14.2 | 15 | 15.1 (2250) |
| 8 | 26.9 | 14.6 | 0 | 58.5 | 14.2 | 20 | 7.2 (1050) |
| 9 | 24.7 | 6.7 | 6.7 | 61.8 | 12.4 | 11 | 24.5 (3550) |

EP 0 133 733 B1

## EP 0 133 733 B1

### Examples 10—15

These examples demonstrate the functional properties of the solid $P_2O_5$. Not all ammonium phosphate fertilizer solutions form a desirable cementitious material with MgO, especially when the solutions are fresh and clear. The set time is usually too long and the compression strength after 2 hours is too low, see Examples 10—14. However, when the inactive fertilizer solution is absorbed into the pores of the porous material and heated, the solid $P_2O_5$ porous material composite forms a desirable cement when mixed with MgO, aggregate, and water as shown in Examples 14 and 15.

8

TABLE 10—15

| Example No. | Type of Fertilizer Solution | % of Fertilizer Solution | % MgO | % Aggregate | % Diatom. Earth | Initial Set Min. | $H_2O$ cc | Compression Strength, MPa (psi) 2 hr. |
|---|---|---|---|---|---|---|---|---|
| 10 | Fresh clear 11—37—0 c) | 13.3 | 13 | 73 | — | 12 | — | 4.4 (640) |
| 11 | Fresh clear 10—34—0 c) | 17.6 | 16.5 | 65.9 | — | 8 | — | <0.7 (<100) |
| 12 | Fresh clear 11—37—0 c) | 13.3 | 13 | 60.4 | 13.3 | — | — | a) |
| 13 | Fresh clear 11—37—0 c) | 26.6 | 11 | 51.1 | 9.2 | 20 | — | 4.4 (640) |
| b)14 | Fresh clear 11—37—0 c) | 13.6 | 13.4 | 73.7 | 11.1 | 8 | 50 | 16.0 (2323) |
| b)15 | Fresh clear 11—37—0 c) | 13.6 | 13.4 | 61.9 | 11.1 | 8 | 50 | 15.3 (2220) |

a) no cement forms; stays a powder.
b) fertilizer solution mixed with diatomaceous earth and dried at 105°C/16 hrs. prior to mixing with MgO aggregate.
c) the first number of e.g., 11—37—0, represents the weight concentration of ammoniacal nitrogen, the second number represents the weight concentration of $P_2O_5$ and the third number represents the weight concentration of potassium.

EP 0 133 733 B1

**Claims**

1. A process for preparing a dry blend capable of forming a fast-setting cement when reacted with an aqueous component, characterized in that

   a) a solid $P_2O_5$-containing material, obtained by mixing a porous material with a sufficient amount of a liquid $P_2O_5$-containing material to form a paste or slurry and heating the mixture until a dry solid is produced, is mixed with

   b) a solid component comprising a magnesium-containing compound, said solid component capable of being dry blended with said solid $P_2O_5$-containing material without reacting therewith and further capable of reacting with said $P_2O_5$-containing material in the presence of said aqueous component to form a monolithic solid,

   said fast-setting cement being capable of developing a compressive strength of at least 3.4 MPa (500 psi) in less than two hours.

2. The process of claim 1, in which the dry blend further comprises an aggregate.

3. The process of claim 1 or 2 wherein the magnesium containing compound is magnesium oxide, hydroxide, carbonate or mixtures thereof.

4. The process of any of claims 1—3 wherein the solid phosphorus pentoxide containing material a) constitutes from about 50% to about 75% by weight of the overall dry blend.

5. The process of claim 2 in which the liquid, phosphorus pentoxide containing material is an ammonium phosphate solution, the porous material is diatomaceous earth, the solid component is magnesium oxide, and the aggregate is silica.

6. The process of claim 2 wherein the aggregate content by weight can be as high as 400% of the combined weight of the solid phosphorus pentoxide material and the solid magnesium component.

7. A process for producing a solid $P_2O_5$-containing material for use in the process as claimed in any of the claims 1—6, characterized in that a porous inert material is mixed with a sufficient amount of a liquid $P_2O_5$-containing material to form a paste or a slurry and the mixture is heated until a dry solid is produced, said porous inert material being at least partially inert to the liquid $P_2O_5$-containing material at ambient temperature and having a porosity sufficient to absorb an amount of liquid $P_2O_5$-containing material sufficient to form a fast setting cement at ambient temperature upon a mixture with magnesium-containing material and water.

8. The process of claim 7 wherein the mixture is heated at a temperature of from about 60°C to about 200°C.

9. The process of claim 7 or 8 wherein the liquid $P_2O_5$-containing material is selected from industrial and agricultural chemicals and wastes.

10. The process of claim 7 or 8 wherein the liquid $P_2O_5$-containing material is selected from an aluminum phosphate solution, phosphoric acid solution, ammonium phosphate solution, calcium phosphate solution and mixtures thereof.

11. The process of claim 7 or 8 wherein the liquid $P_2O_5$-containing material is an ammonium phosphate solution having a polyphosphate content ranging from about 20% to about 70% by weight.

12. The process of any of claims 7—11 wherein the dry solid produced contains from about 10% to about 70% by weight of the $P_2O_5$-containing material.

13. The process of claim 7 or 8 wherein said porous material has a porosity sufficient to absorb at least 80% on a liquid basis of liquid $P_2O_5$-containing material based on the weight of porous material.

14. The process of claims 7 or 8 wherein said porous material has a porosity sufficient to absorb from about 80% to about 225% on a liquid basis of liquid $P_2O_5$-containing material.

**Patentansprüche**

1. Verfahren zur Herstellung einer Trockenmischung, die beim Umsetzen mit einer wässrigen Komponente eine schnell härtenden Zement ergibt, dadurch gekennzeichnet, daß

   a) ein festes, $P_2O_5$-enthaltendes Material, das erhalten wird, indem ein poröses Material mit einer zur Bildung einer Paste oder einer Aufschlämmung ausreichenden Menge eines flüssigen, $P_2O_5$-enthaltenden Materials vermischt und die Mischung erhitzt wird, bis ein trockener Feststoff erhalten wird, vermischt wird mit

   b) einer festen Komponente, die eine magnesiumhaltige Verbindung aufweist, wobei diese feste Komponente mit dem festen, $P_2O_5$-enthaltenden Material trocken vermischt werden kann, ohne damit zu reagieren, sowie ferner mit dem $P_2O_5$-enthaltenden Material in Anwesenheit der wässrigen Komponente zu einem monolithischen Feststoff reagieren kann,

   wobei der schnell härtende Zement in weniger als 2h eine Druckfestigkeit von mindestens 3,4 MPa (500 psi) aufbauen kann.

2. Verfahren nach Anspruch 1, bei dem die Trockenmischung außerdem ein Aggregat aufweist.

3. Verfahren nach Anspruch 1 oder 2, bei dem die magnesiumhaltige Verbindung Magnesiumoxid, Magnesiumhydroxid, Magnesiumcarbonat oder Mischungen davon ist.

4. Verfahren nach einem der Ansprüche 1 bis 3, bei dem das feste, Phosphorpentoxid enthaltende Material a) etwa 50% bis etwa 75 Gew.-% der gesamten Trockenmischung ausmacht.

EP 0 133 733 B1

5. Verfahren nach Anspruch 2, bei dem das flüssige, Phosphorpentoxid enthaltende Material eine Ammoniumphosphatlösung ist, das poröse Material Diatomeenerde ist, die feste Komponente Magnesiumoxid ist und das Aggregat Silica ist.

6. Verfahren nach Anspruch 2, bei dem der Aggregat-Gewichtsgehalt bis zu 400% des gemeinsamen Gewichts aus dem festen, Phosphorpentoxid enthaltenden Material und der festen Magnesiumkomponente ausmachen kann.

7. Verfahren zur Herstellung eines festen, P$_2$O$_5$-enthaltenden Materials, das in dem Verfahren gemäß einem der Ansprüche 1 bis 6 eingesetzt werden kann, dadurch gekennzeichnet, daß ein poröses, inertes Material mit einer zur Bildung einer Paste oder einer Aufschlämmung ausreichenden Menge eines flüssigen, P$_2$O$_5$-enthaltenden Materials vermischt wird und die Mischung erhitzt wird, bis ein trockener Feststoff erhalten wird, wobei das poröse inerte Material bei Raumtemperatur zumindest teilweise für das flüssige P$_2$O$_5$-enthaltende Materiallinert ist und eine solche Porösität besitzt, daß es eine Menge des flüssigen, P$_2$O$_5$-enthaltenen Materials absorbieren kann, die ausreicht, um bei Raumtemperatur beim Vermischen mit einem magnesiumhaltigen Material und Wasser einen schnellhärtenden Zement zu bilden.

8. Verfahren nach Anspruch 7, bei dem die Mischung auf eine Temperatur von etwa 60°C bis etwa 200°C erhitzt wird.

9. Verfahren nach Anspruch 7 oder 8, bei dem das flüssige, P$_2$O$_5$ enthaltende Material aus industriellen und landwirtschaftlichen Chemikalien und Abfällen ausgewählt ist.

10. Verfahren nach Anspruch 7 oder 8, bei dem das flüssige, P$_2$O$_5$ enthaltende Material aus einer Aluminiumphosphatlösung, Phosphorsäurelösung, Ammoniumphosphatlösung und Calciumphosphatlösung sowie Mischungen davon ausgewählt ist.

11. Verfahren nach Anspruch 7 oder 8, bei dem das flüssige, P$_2$O$_5$-enthaltende Material eine Ammoniumphosphatlösung mit einem Polyphosphatgehalt von etwa 20 bis etwa 70 Gew.-% ist.

12. Verfahren nach einem der Ansprüche 7 bis 11, bei dem der hergestellte, trockene Feststoff etwa 10 bis etwa 70 Gew.-% des P$_2$O$_5$-enthaltenden Materials enthält.

13. Verfahren nach Anspruch 7 oder 8, bei dem das poröse Material eine solche Porösität besitzt, daß es mindestens 80%, bezogen auf eine flüssige Basis, des flüssigen P$_2$O$_5$-enthaltenden Materials absorbieren kann.

14. Verfahren nach den Ansprüchen 7 oder 8, bei dem das poröse Materail eine solche Porösität besitzt, daß es von etwa 80% bis etwa 225%, bezogen auf eine flüssige Basis, des flüssigen P$_2$O$_5$-enthaltenden Materials absorbieren kann.

**Revendications**

1. Un procédé de préparation d'un mélange sec capable de former un ciment à prise rapide lorsqu'il réagit avec un composant aqueux, caractérisé en ce que l'on mélange:
a) un matériau solide contenant du P$_2$O$_5$, obtenu par mélange d'un matériau poreux avec une quantité suffisante d'un matériau liquide contenant du P$_2$O$_5$ pour former une pâte ou une bouillie et par chauffage du mélange jusqu'à obtention d'un solide sec;
b) un composant solide comprenant un composé contenant du magnésium, ledit composant solide étant capable d'être mélangé à sec avec ledit matériau solide contenant du P$_2$O$_5$ sans réagir avec celui-ci et susceptible en outre de réagir avec ledit matériau contenant du P$_2$O$_5$ en présence dudit composant aqueux pour former un solide monolithique;
ledit ciment à prise rapide étant capable de présenter une résistance à la compression d'au moins 3,4 MPa (500 psi) en moins de deux heures.

2. Le procédé de la revendication 1, dans lequel le mélange solide comprend en outre un agrégat.

3. Le procédé de la revendication 1 ou 2, dans lequel le composé contenant du magnésium est de l'oxyde, de l'hydroxyde, du carbonate de magnésium ou leur mélange.

4. Le procédé selon l'une quelconque des revendications 1 à 3, dans lequel le matériau solide contenant de l'hémipentoxyde de phosphore (a) constitue d'environ 50% à environ 70% en poids du mélange sec total.

5. Le procédé de la revendication 2, dans lequel le matériau liquide contenant l'hémipentoxyde de phosphore est une solution de phosphate d'ammonium, le matériau poreux est de la terre de diatomée, le composant solide est de l'oxyde de magnésium, et l'agrégat est de la silice.

6. Le procédé de la revendication 2, dans lequel la teneur en agrégat peut atteindre jusqu'à 400% en poids, par rapport au poids total du matériau solide contenant de l'hémipentoxyde de phosphore et du composant solide contenant du magnésium.

7. Un procédé de fabrication d'un matériau solide contenant de l'hémipentoxyde de phosphore qui convient comme constituant dans le procédé revendiqué dans l'une quelconque des revendications 1 à 6, caractérisé en ce qu'un matériau poreux inerte est mélangé avec une quantité suffisante d'un matériau liquide contenant du P$_2$O$_5$ pou former une pâte ou une bouillie et que le mélange est chauffé jusqu'à obtention d'un solide sec, ledit matériau poreux inerte étant à température ambiante au moins partiellement inerte vis-à-vis du matériau liquide contenant du P$_2$O$_5$ et ayant à température ambiante une porosité suffisante pour absorber une quantité de matériau liquide contenant du P$_2$O$_5$ suffisante pour

11

EP 0 133 733 B1

former un ciment à prise rapide lorsque ledit solide sec est mélangé avec un matériau contenant du magnésium et de l'eau.

8. Le procédé de la revendication 7, dans leuqel le mélange est chauffé à une température d'environ 60°C à environ 200°C.

9. Le procédé de la revendication 7 ou 8, dans lequel le matériau liquid contenant du $P_2O_5$ est choisi parmi les résidus ou les dérivés chimiques industriels ou de l'industrie des engrais.

10. Le procédé de la revendication 7 ou 8, dans lequel le matériau liquide contenant du $P_2O_5$ peut être une solution de phosphate d'aluminium, une solution d'acide phosphorique, une solution de phosphate d'ammonium, une solution de phosphate de calcium ou un mélange de celles-ci.

11. Le procédé de la revendication 7 ou 8, dans lequel le matériau liquide contenant du $P_2O_5$ est une solution de phosphate d'ammonium ayant une teneur en polyphosphate d'environ 20% à environ 70% en poids.

12. Le procédé selon l'une quelconque des revendications 7 à 11, dans lequel le solide sec obtenu contient d'environ 10% à environ 70% en poids du matériau contenant du $P_2O_5$.

13. Le procédé de la revendication 7 ou 8, dans lequel le matériau poreux a une porosité suffisante pour absorber au moins 80% en poids, par rapport au poids du matériau poreux, d'un matériau liquide contenant du $P_2O_5$.

14. Le procédé de la revendication 7 ou 8, dans lequel le matériau poreux a une porosité suffisante pour absorber d'environ 80% à environ 225% d'un mtériau liquide contenant du $P_2O_5$.

12